# EUROPEAN PATENT SPECIFICATION

(11) **EP 2 794 318 B1**
(45) Date of publication and mention of the grant of the patent: **06.04.2016**
(21) Application number: 12812443.5
(22) Date of filing: 11.12.2012
(51) Int. Cl.: B60K 6/48, F16H 3/00, B60K 6/54

(54) **OFF-AXIS MOTOR WITH HYBRID TRANSMISSION METHOD AND SYSTEM**
ACHSENVERSETZTER MOTOR MIT EINEM HYBRIDGETRIEBEVERFAHREN UND -SYSTEM
PROCÉDÉ ET SYSTÈME DE MOTEUR DÉCALÉ AVEC BOÎTE DE VITESSES HYBRIDE

(30) Priority: 19.12.2011 US 201161577155 P
(43) Date of publication of application: 29.10.2014
(73) Proprietor: FCA US LLC, Auburn Hills, MI 48326-2766 (US)
(72) Inventor: KLINGSTON, David, E., Shelby Township, MI 48317 (US); MILLER, Travis, J., Romulus, MI 48174 (US); TAMAI, Goro, Bloomfield Hills, MI 48302 (US)
(74) Representative: Franzolin, Luigi
(86) International application number: PCT/US2012/068977
(87) International publication number: WO 2013/096016

(56) References cited:
- EP-A1- 2 390 127
- DE-A1-102010 010 436
- FR-A1- 2 689 821
- FR-A1- 2 772 675
- US-A1- 2008 000 312
- US-B1- 6 332 257

## Description

### FIELD

The technology herein relates generally to changing a conventional transmission into a hybrid transmission. More particularly, the technology herein relates to coupling an off-axis electric motor to a transmission.

### BACKGROUND

FR 2 689 821 describes a transmission according to the preamble of claim 1.

A gasoline-electric hybrid vehicle includes both a gasoline-powered engine and an electric-powered motor. In a parallel hybrid system, the gasoline-powered engine and the electric-powered motor are both coupled to the vehicle's transmission. The resultant hybrid transmission converts the gasoline-powered engine and electric-powered motor output torques to an output torque sufficient to power the vehicle's drive shaft.

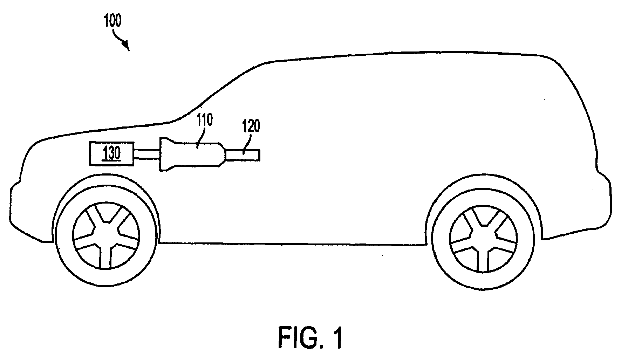

Traditionally, as illustrated in FIG. 1, electric-powered motors 130 in a hybrid vehicle 100 have been provided along the same axis as the output shaft 120 of the vehicle's transmission 110. While on-axis positioning may result in certain efficiencies in the transmission of power from the electric motor to the transmission to the vehicle's drive shaft, the size and related output ability of an on-axis electric motor is often constrained by positions of already existing engine components. Thus, the on-axis electric motor is often less powerful than desired, necessitating the inclusion of a second auxiliary electric motor that is used to make up for the shortcomings of the primary electric motor.

Thus, there is a need and a desire to simplify gasoline-electric hybrid vehicles by using an electric-powered motor that provides sufficient power so that the vehicle need only rely upon one electric-powered motor. There is also a need and a desire to be able to convert a traditional transmission in an engine compartment to a hybrid transmission that can couple to an electric-powered motor of sufficient power.

### SUMMARY

In one form, the present disclosure provides a transmission coupled to an off-axis electric motor in a gasoline-electric hybrid vehicle. The transmission includes a motor-driven gear that replaces an engine-driven reverse gear. The motor-driven gear is hard-splined to an output shaft of the transmission. An electric motor is coupled to the output shaft of the transmission via the motor-driven gear. Thus, the electric motor may be oriented along an axis that differs from the axis of the transmission's output shaft. A motor drive unit couples the electric motor to the motor-driven gear and provides for both forward and reverse torque. The motor-driven gear and motor drive unit are configured so that the electric motor provides a torque ratio that varies from 5:1 to 8:1.

In another form, the present disclosure provides a method of modifying a transmission in a gasoline-electric hybrid vehicle in order to couple the transmission to an off-axis electric motor. The method includes replacing an engine-driven reverse gear of the transmission with a motor-driven gear. A motor drive unit is coupled to the motor-driven gear to provide both forward and reverse torque to an output shaft of the transmission. The method further includes coupling an off-axis electric motor to the transmission output shaft via the motor drive unit and the motor-driven gear. The off-axis electric motor is oriented along an axis that differs from the axis of the transmission's output shaft. The motor-driven gear and motor drive unit are configured so that the electric motor provides a torque ratio that varies from 5:1 to 8:1.

Further areas of applicability of the present disclosure will become apparent from the detailed description provided hereinafter. It should be understood that the detailed description, including disclosed embodiments and drawings, are merely exemplary in nature intended for purposes of illustration only and are not intended to limit the scope of the invention, its application or use.

### BRIEF DESCRIPTION OF THE DRAWINGS

Figure 1 illustrates an on-axis electric-powered motor in a gasoline-electric hybrid vehicle;
Figure 2 illustrates an off-axis electric-powered motor in a gasoline-electric hybrid vehicle according to the principles of the present disclosure;
Figure 3 illustrates a conventional dry dual-clutch transmission;
Figure 4 illustrates a modified dry dual-clutch transmission and an off-axis electric motor according to the principles of the present disclosure; and
Figure 5 illustrates a method of modifying a transmission to couple with an off-axis electric motor according to the principles of the present disclosure.

### DETAILED DESCRIPTION

In order to provide a gasoline-electric hybrid vehicle with a single electric motor that provides sufficient power so that the vehicle need not rely upon a second electric motor, either the vehicle's existing engine/engine compartment must be reconfigured to allow a sufficiently powerful on-axis electric motor or a sufficiently powerful electric motor must be located in a non-traditional position within the engine compartment. Because redesigning the vehicle's engine/engine compartment is costly and time-consuming, the more efficient option is to modify existing engine structures to include an electric motor that is positioned on a different axis than the vehicle's transmission output shaft. An off-axis electric motor can both provide sufficient power to the hybrid vehicle and can do so by minimizing necessary changes to other engine compartment components such as the gasoline engine. By coupling the off-axis motor to the output shaft of the vehicle using gears, for example, that can step-up the off-axis motor's output torque, the off-axis motor can still maintain a small form factor.

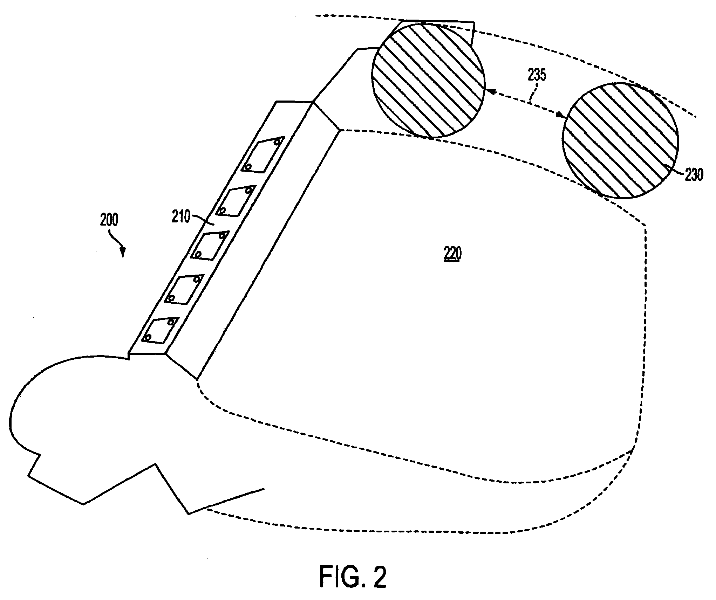

FIG. 2 illustrates a profile of a portion of a vehicle's engine compartment 200. Within the compartment 200, a gasoline-powered engine 210 and a transmission 220 are included. The gasoline-powered engine 210 is coupled to the transmission 220 to provide torque output to the transmission 220 (and ultimately to the vehicle's drive shaft). In addition, FIG. 2 includes an off-axis electric motor 230. The off-axis electric motor 230 is positioned so that it is not constrained by on-axis obstacles. Instead, the off-axis electric motor 230 is positioned anywhere within an arc bubble 235. The off-axis motor's exact placement within the arc bubble 235 is dependent on the specific engine compartment 200 and the position that results in the most efficient relay of power to the transmission 220. Specifically, the off-axis electric motor 230 is positioned within the arc bubble 235 such that the motor 230 may be implemented with a length/diameter ratio that provides a desired motor efficiency when the off-axis motor 230 is coupled to the transmission using appropriate gearing, for example.

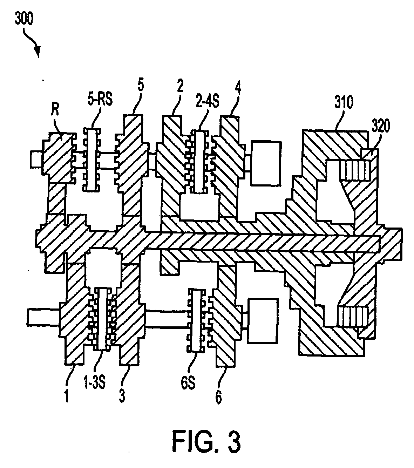

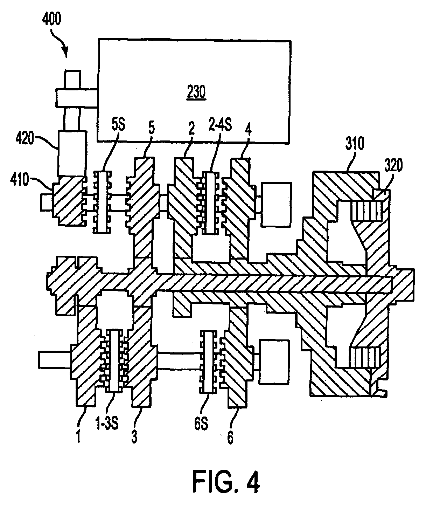

The off-axis motor 230 is coupled to the transmission 220. The transmission 220 is modified to allow the off-axis motor 230 to couple to the transmission's output through an off-axis lay shaft, as is illustrated in FIGS. 3 and 4.

FIG. 3 illustrates a conventional dry dual-clutch transmission ("DDCT") 300 that can be modified for coupling with the off-axis electric motor 230. While any type of transmission may be modified using the techniques described herein, the steps required to modify the DDCT 300 are typical of the steps used to modify other transmissions.

The DDCT 300 illustrated in FIG. 3 includes six forward-direction gears and one reverse-direction gear. One clutch 310 is coupled to the even-numbered gears 2, 4 and 6, while a second clutch 320 is coupled to the odd-numbered gears 1, 3 and 5. The second clutch 320 is also coupled to the reverse gear R. The gears are coupled to the transmission output shaft via synchronizers that act to match the speed of the gear to that of the shaft as each gear is engaged. The synchronizers are often shared between gears. In DDCT 300, a synchronizer 5-RS is shared between the transmission's 5th gear and the transmission's reverse gear. A synchronizer 1-3S is shared between the first and third gears. A synchronizer 2-4S is shared between the second and fourth gears. The sixth gear has its own synchronizer 6S.

The DDCT 300 of FIG. 3 is modified in FIG. 4 to allow for the coupling of the off-axis electric motor 230. FIG. 4 illustrates a modified DDCT 400 with the off-axis motor 230. The modified DDCT 400 still includes gears 1-6 and synchronizers 1-3S, 2-4S and 6S. However, the reverse gear R and the synchronizer 5-RS have been modified. In order to couple the motor 230 to the transmission output shaft, the reverse gear R is replaced with a motor-driven gear 410. The motor-driven gear 410 is coupled to the motor 230 via a motor drive unit 420 that may include an idler gear or chain sprockets. The motor-driven gear 410 is hard-splined to the transmission output shaft, thus eliminating the need for the gear to couple via a synchronizer. Thus, the synchronizer 5-RS is modified to act as a synchronizer to the fifth gear only, thus becoming synchronizer 5S.

The motor drive unit 420 couples the electric motor 230 to the motor-driven gear 410 and is able to provide both forward and reverse torque and direction. Thus, the modified DDCT 400 provides an electric-only reverse mode. Forward modes are provided by either the electric motor 230 or the gasoline-powered engine 210. The electric motor 230 has sufficient output to either fully propel the vehicle or to provide torque assist to the gasoline-powered engine 210. In addition, the electric motor 230 is capable of generating electric power via, for example, regenerative braking.

The off-axis motor 230 may be coupled to transmissions other than the DDCT 300. In each case, the transmission's reverse gear is replaced by a motor-driven gear. The motor-driven gear is hard-splined to the transmission's output shaft and is coupled to the off-axis motor 230 via a motor drive unit. If the transmission's original reverse gear had shared a synchronizer with another gear, then the shared synchronizer is replaced with a synchronizer specific to the gear that had shared the synchronizer with the reverse gear.

In each modified transmission, the reverse gear is replaced with a motor-driven gear that is sized to provide an approximately 5:1 torque ratio from the off-axis motor 230. The torque ratio may vary, but is generally a ratio between 5:1 and 8:1. If needed, an idler gear and/or chain sprocket may be used to couple the off-axis motor 230 to the motor-driven gear to achieve the desired torque ratio, as dictated by the size of the off-axis motor 230. In this way, the off-axis motor 230 may be maintained as a small motor with conventional length/diameter aspect ratios that can still provide sufficient output torque.

While an object of the present disclosure is to enable placement of a single electric motor of sufficient power to avoid use of additional electric motors, nothing in this disclosure prevents the use of additional electric motors that may be coupled to the gas-powered engine in order to restart the gas-powered engine or even to provide additional electric power generation.

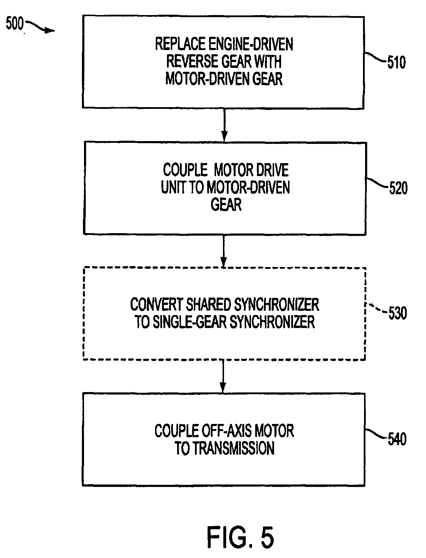

A method 500 of modifying a transmission to couple with an off-axis electric motor is illustrated in FIG. 5. At step 510, the transmission's reverse gear is replaced with a motor-driven gear. The motor-driven gear is hard-splined to the transmission's output shaft. At step 520, a motor drive unit is coupled to the motor-driven gear to provide both forward and reverse torque and direction to the gear. At step 530, if necessary, any synchronizer previously shared between the transmission's reverse gear and an additional gear is replaced by a synchronizer specific to the additional gear only. Steps 510, 520 and 530 may be performed in any order. At step 540, an off-axis electric motor is coupled to the transmission via the motor drive unit and the motor-driven gear.

## Claims

1. A transmission (220) coupled to an off-axis electric motor in a gasoline-electric hybrid vehicle, comprising:
a motor-driven gear (410), the motor-driven gear (410) being hard-splined to an output shaft of a transmission (220); and
an electric motor coupled to the output shaft of the transmission (220) via the motor-driven gear (410), **characterized in that** the motor-driven gear (410) replaces an engine-driven reverse gear (R).

2. The transmission of claim 1, further comprising an idler gear that couples the electric motor to the motor-driven gear (410).

3. The transmission of claim 1, further comprising chain sprockets that couple the electric motor to the motor-driven gear (410).

4. The transmission of claim 1, wherein the motor-driven gear (410) is configured to rotate the output shaft in both forward and backward directions.

5. The transmission of claim 1, wherein the electric motor is coupled to the output shaft along an axis that differs from an axis defined by the output shaft.

6. The transmission of claim 1, wherein the electric motor is configured to both provide and generate electric power.

7. The transmission of claim 1, wherein only one electric motor is coupled to the transmission (220).

8. The transmission of claim 1, wherein the transmission (220) is a dry dual-clutch transmission (300).

9. The transmission of claim 1, wherein the motor-driven gear (410) is sized to provide a torque ratio from the electric motor of between 5:1 and 8:1.

10. A method of modifying a transmission (220) in a gasoline-electric hybrid vehicle to couple the transmission (220) to an off-axis electric motor (230), the method comprising:
replacing an engine-driven reverse gear (R) of the transmission (220) with a motor-driven gear (410);
coupling a motor drive unit to the motor-driven gear (410) to provide both forward and reverse torque to an output shaft of the transmission (220); and
coupling an off-axis electric motor (230) to the transmission (220) output shaft via the motor drive unit and the motor-driven gear (410).

11. The method of claim 10, further comprising using an idler gear in the motor drive unit to couple the off-axis electric motor (230) to the motor-driven gear (410).

12. The method of claim 10, further comprising using chain sprockets in the motor drive unit to couple the off-axis electric motor (230) to the motor-driven gear (410).

13. The method of claim 10, wherein coupling the off-axis electric motor (230) to the transmission (220) output shaft comprises coupling the off-axis electric motor (230) to the transmission (220) output shaft along an axis that differs from an axis defined by the output shaft.

14. The method of claim 10, wherein the transmission (220) is a dry dual-clutch transmission (300).

15. The method of claim 10, wherein replacing an engine-driven reverse gear (R) of the transmission (220) with a motor-driven gear (410) comprises using a motor-driven gear (410) sized to provide a torque ratio from the off-axis electric motor (230) of between 5:1 and 8:1.

## Patentansprüche

1. Getriebe (22), das mit einem außeraxialen Elektromotor in einem Benzin/Elektro-Hybridfahrzeug gekoppelt ist und umfasst:
ein durch einen Motor angetriebenes Zahnrad (410), wobei das durch einen Motor angetriebene Zahnrad (410) mit einer Ausgangswelle eines Getriebes (220) starr kerbverzahnt ist; und
einen Elektromotor, der mit der Ausgangswelle des Getriebes (220) über das durch einen Motor angetriebene Zahnrad (410) gekoppelt ist, **dadurch gekennzeichnet, dass** das durch einen Motor angetriebene Zahnrad (410) ein durch eine Kraftmaschine angetriebenes Rückwärtsgangzahnrad (R) ersetzt.

2. Getriebe noch Anspruch 1, das ferner ein Leerlaufzahnrad umfasst, das den Elektromotor mit dem durch einen Motor angetriebenen Zahnrad (410) koppelt.

3. Getriebe nach Anspruch 1, das ferner Kettenräder umfasst, die den Elektromotor mit dem durch einen Motor angetriebenen Zahnrad (410) koppelt.

4. Getriebe nach Anspruch 1, wobei das durch einen Motor angetriebene Zahnrad (410) konfiguriert ist, die Ausgangswelle sowohl im Vorwärts- als auch im Rückwärtsrichtung zu drehen.

5. Getriebe nach Anspruch 1, wobei der Elektromotor mit der Ausgangswelle längs einer Achse gekoppelt ist, die von einer durch die Ausgangswelle definierten Achse verschieden ist.

6. Getriebe nach Anspruch 1, wobei der Elektromotor konfiguriert ist, elektrische Leistung sowohl bereitzustellen als auch zu erzeugen.

7. Getriebe noch Anspruch 1, wobei mit dem Getriebe (220) nur ein Elektromotor gekoppelt ist.

8. Getriebe noch Anspruch 1, wobei das Getriebe (220) ein Trocken-Doppelkupplungsgetriebe (300) ist.

9. Getriebe nach Anspruch 1, wobei das durch einen Motor angetriebene Zahnrad (410) so bemessen ist, dass es ein Drehmomentverhältnis von dem Elektromotor im Bereich von 5:1 bis 8:1 bereitstellt.

10. Verfahren zum Abwandeln eines Getriebes (220) in einem Benzin/Elektro-Hybridfahrzeug, um das Getriebe (220) mit einem außeraxialen Elektromotor (230) zu koppeln, wobei das Verfahren Folgendes umfasst:
Ersetzen eines durch eine Kraftmaschine angetriebenen Rückwärtsgangzahnrades (R) des Getriebes durch ein durch einen Motor angetriebenes Zahnrad (410);
Koppeln einer Motorantriebseinheit mit dem durch einen Motor angetriebenen Zahnrad (410), um für eine Ausgangswelle des Getriebes (220) sowohl ein Vorwärts- als auch ein Rückwärtsdrehmoment bereitzustellen; und
Koppeln eines außeraxialen Elektromotors (230) mit der Ausgangswelle des Getriebes (220) über die Motorantriebseinheit und das durch einen Motor angetriebene Zahnrad (410).

11. Verfahren nach Anspruch 10, das ferner umfasst, ein Leerlaufzahnrad in der Motorantriebseinheit zu verwenden, um den außeraxialen Elektromotor (32) mit dem durch einen Motor angetriebenen Zahnrad (410) zu koppeln.

12. Verfahren nach Anspruch 10, das ferner umfasst, Kettenräder in der Motorantriebseinheit zu verwenden, um den außeraxialen Elektromotor (230) mit dem durch einen Motor angetriebenen Zahnrad (410) zu koppeln.

13. Verfahren nach Anspruch 10, wobei das Koppeln des außeraxialen Elektromotors (230) mit der Ausgangswelle des Getriebes (220) das Koppeln des außeraxialen Elektromotors (32) mit der Ausgangswelle des Getriebes (220) längs einer Achse, die von einer durch die Ausgangswelle definierten Achse verschieden ist, umfasst.

14. Verfahren nach Anspruch 10, wobei das Getriebe (220) ein Trocken-Doppelkupplungsgetriebe (300) ist.

15. Verfahren nach Anspruch 10, wobei das Ersetzen eines durch eine Kraftmaschine angetriebenen Rückwärtsgangzahnrades (R) des Getriebes (220) durch ein durch einen Motor angetriebenes Zahnrad (410) umfasst, ein durch einen Motor angetriebenes Zahnrad (410) zu verwenden, das so bemessen ist, dass es ein Drehmomentverhältnis von dem außeraxialen Elektromotor (230) im Bereich von 5:1 bis 8:1 bereitstellt.

## Revendications

1. Transmission (200) couplée à un moteur électrique décalé dans un véhicule hybride essence-électrique, comprenant :
un engrenage entraîné par moteur (410), l'engrenage entraîné par moteur (410) étant emmanché à force sur cannelure à un arbre de sortie d'une transmission (220) ; et
un moteur électrique couplé à l'arbre de sortie de la transmission (220) via l'engrenage entraîné par moteur (410), **caractérisée en ce que** l'engrenage entraîné par moteur (410) remplace un engrenage à renversement de marche entraîné par moteur thermique (R).

2. Transmission selon la revendication 1, comprenant en outre un engrenage intermédiaire qui couple le moteur électrique à l'engrenage entraîné par moteur (410).

3. Transmission selon la revendication 1, comprenant en outre des pignons de chaîne qui couplent le moteur électrique à l'engrenage entraîné par moteur (410).

4. Transmission selon la revendication 1, dans laquelle l'engrenage entraîné par moteur (410) est configuré pour tourner l'arbre de sortie à la fois dans les directions avant et arrière.

5. Transmission selon la revendication 1, dans laquelle le moteur électrique est couplé à l'arbre de sortie le long d'un axe qui diffère d'un axe défini par l'arbre de sortie.

6. Transmission selon la revendication 1, dans laquelle le moteur électrique est configuré à la fois pour fournir et générer une puissance électrique.

7. Transmission selon la revendication 1, dans laquelle un seul moteur électrique est couplé à la transmission (220).

8. Transmission selon la revendication 1, dans laquelle la transmission (220) est une transmission à double embrayage sec (300).

9. Transmission selon la revendication 1, dans laquelle l'engrenage entraîné par moteur (410) est dimensionné de sorte à fournir un rapport de couple du moteur électrique entre 5:1 et 8:1.

10. Procédé de modification d'une transmission (220) dans un véhicule hybride essence-électrique pour coupler la transmission (220) à un moteur électrique décalé (230), le procédé comprenant :
le remplacement d'un engrenage à renversement de marche entraîné par moteur thermique (R) de la transmission (220) avec un engrenage entraîné par moteur (410) ;
le couplage d'une unité d'entraînement de moteur à l'engrenage entraîné par moteur (410) à la fois pour fournir le couple avant et arrière à un arbre de sortie de la transmission (220) ; et
le couplage d'un moteur électrique décalé (230) à l'arbre de sortie de transmission (220) via l'unité d'entraînement de moteur et l'engrenage entraîné par moteur (410).

11. Procédé selon la revendication 10, comprenant en outre l'utilisation d'un engrenage intermédiaire dans l'unité d'entraînement de moteur pour coupler le moteur électrique décalé (230) à l'engrenage entraîné par moteur (410).

12. Procédé selon la revendication 10, comprenant en outre l'utilisation de pignons de chaîne dans l'unité d'entraînement de moteur pour coupler le moteur électrique décalé (230) à l'engrenage entraîné par moteur (410).

13. Procédé selon la revendication 10, dans lequel le couplage du moteur électrique décalé (230) à l'arbre de sortie de transmission (220) comprend le couplage du moteur électrique décalé (230) à l'arbre de sortie de transmission (220) le long d'un axe qui diffère d'un axe défini par l'arbre de sortie.

14. Procédé selon la revendication 10, dans lequel la transmission (220) est une transmission à double embrayage sec (300).

15. Procédé selon la revendication 10, dans lequel le remplacement d'un engrenage à renversement de marche entraîné par moteur thermique (R) de la transmission (220) avec un engrenage entraîné par moteur (410) comprend l'utilisation d'un engrenage entraîné par moteur (410) dimensionné de sorte à fournir un rapport de couple du moteur électrique décalé (230) entre 5:1 et 8:1.
